(19) Europäisches Patentamt
European Patent Office
Office européen des brevets

(11) Numéro de publication : **0 377 356 B1**

(12) # FASCICULE DE BREVET EUROPEEN

(45) Date de publication du fascicule du brevet : **15.04.92 Bulletin 92/16**

(51) Int. Cl.[5] : **C02F 3/06,** C02F 1/28, B01D 24/24, B01D 29/62

(21) Numéro de dépôt : **89403327.3**

(22) Date de dépôt : **30.11.89**

(54) **Contacteur biologique d'épuration d'eau pour la production d'eau potable et procédé de pilotage associé.**

(30) Priorité : **05.12.88 FR 8815909**

(43) Date de publication de la demande : **11.07.90 Bulletin 90/28**

(45) Mention de la délivrance du brevet : **15.04.92 Bulletin 92/16**

(84) Etats contractants désignés : **AT BE CH DE ES FR GB GR IT LI LU NL SE**

(56) Documents cités :
**FR-A- 2 161 240**
**FR-A- 2 358 362**
**US-A- 4 274 966**

(73) Titulaire : **SOCIETE PICA-PRODUITS INDUSTRIELS ET CHARBONS ACTIFS**
**16, rue Trézel**
**F-92309 Levallois Perret Cédex (FR)**

(72) Inventeur : **Montagnon, Jean Roger**
**14 Les Martins-Pêcheurs**
**F-78170 la Celle St. Cloud (FR)**
Inventeur : **Bablon, Guy Pierre**
**19 Le Pré des Coulons**
**F-78810 Feucherolles (FR)**
Inventeur : **Dagois, Gérard Louis Aldino**
**4 rue Pierre Durand**
**F-92600 Asnières (FR)**
Inventeur : **Ventresque, Claire Catherine**
**30 rue du Bournard**
**F-92700 Colombes (FR)**

(74) Mandataire : **Rinuy, Santarelli**
**14, avenue de la Grande Armée**
**F-75017 Paris (FR)**

**EP 0 377 356 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne les modalités d'exploitation d'un contacteur biologique comportant un lit de matériau granulaire actif convenablement choisi (tel qu'un charbon actif), destiné à assurer une filtration et une épuration physique et biologique d'eaux chargées en matières en suspension et/ou en solution (en partie organiques). Elle se place principalement dans le cadre de la production d'eau potable.

Ainsi qu'on le sait, la production d'eau potable consiste à prélever de l'eau dans le milieu naturel, par exemple dans des cours d'eaux au voisinage des zones urbaines, et à lui faire subir divers traitements visant à la clarifier et l'épurer, de manière à satisfaire diverses conditions ou normes physiques, organoleptiques, chimiques et bactériologiques.

Pour assurer cet objectif en permanence il est souhaitable de produire, en sortie de la station de traitement, une eau de qualité supérieure aux normes afin de disposer d'une marge de sécurité, d'autant que la qualité de l'eau est susceptible de se dégrader dans le réseau de distribution.

Une filière classique de production d'eau potable à partir d'une eau prélevée en milieu naturel comporte par exemple :

- un dégrillage qui retient les plus grosses impuretés charriées par l'eau à clarifier ;
- un prétraitement avec une introduction de réactifs suivie d'une floculation et d'une décantation, de manière à éliminer les matières en suspension ;
- une filtration sur sable au cours de laquelle se poursuit la nitrification biologique de l'ammoniaque et l'élimination des impuretés en suspension ;
- une ozonisation qui joue une fonction bactéricide et virulicide ;
- une filtration sur charbon actif en grains pour éliminer les matières organiques ;
- une chloration.

De manière connue, la filtration sur charbon actif dans un tel processus correspond à une adsorption des impuretés sur la surface et dans la porosité du charbon actif : cela impose de régénérer périodiquement (thermiquement ou chimiquement) le charbon actif saturé.

Il a été récemment proposé d'utiliser ce charbon actif, dans la production d'eau, pour assurer en outre une dégradation biologique des matières organiques bio-dégradables en les faisant consommer par des bactéries entretenues en milieu aérobie dans le lit de charbon actif granulaire. On a ainsi cherché à faire jouer une fonction additionnelle au charbon actif, à savoir une fonction de support biologique.

En fait, cette utilisation biologique du charbon actif en est encore à ses débuts et on a actuellement tendance à ne définir des conditions opératoires pour un tel lit biologique que par analogie, lorsque cela est possible, avec celles utilisées pour les lits filtrants classiques (par exemple à sable).

Il en est ainsi notamment des modalités de lavage.

En effet, la retenue par un lit filtrant à sable de matières en suspension dans l'eau incidente résulte en un colmatage des interstices entre grains, ce qui provoque par une augmentation de la perte de charge de l'eau à travers le lit filtrant : il est donc nécessaire de nettoyer périodiquement le sable. Pour ce faire, il est connu de faire circuler dans le sable en flux ascendant de l'air ou de l'eau en vue de décrocher les impuretés puis, par rinçage, d'évacuer par surverse ces impuretés. Il a même été proposé dans certains cas d'injecter à la fois de l'air et de l'eau.

Or, l'application d'une telle procédure de lavage à un lit comportant des grains de charbon actif impliquant une injection simultanée d'air et d'eau est en général considérée comme nocive en raison de l'attrition (usure) des grains à laquelle elle conduit, qui se traduit par une usure rapide des grains de charbon actif et par des pertes substantielles de ceux-ci par entraînement en surverse. Il est généralement admis en conséquence que le charbon actif ne se prête pas à un lavage incluant une telle phase d'injection mixte (air + eau) et que l'optimisation des conditions opératoires d'un lit biologique de charbon actif exclurait nécessairement cette phase d'injection mixte (air + eau) pour ne retenir qu'une injection d'air seul et/ou une injection d'eau. Ce préjugé de l'homme de métier est exprimé notamment dans ACTIVATED CARBON ADSORPTION of Organics from the Aqueous Phase - Volume 2 - de Michael J McGUIRE et Irwin H. SUFFET édité par ANN ARBOR SCIENCE (1980).

L'invention vise précisément une optimisation de ces conditions opératoires en mode biologique, ce qui a nécessité de définir des conditions auxquelles doivent satisfaire :

- le matériau granulaire constitutif du lit biologique (le plus souvent, mais a priori pas nécessairement, à base de charbon actif) pour constituer un "bon" support biologique apte à favoriser un développement approprié de populations bactériennes ;
- la fréquence de lavage du lit biologique ;
- les étapes de la séquence de lavage à contre-courant.

En fait, la fonction d'un tel lit biologique n'est pas seulement de filtrer mais surtout de mettre en contact une population bactérienne avec le substrat organique contenu dans l'eau ; de plus le lavage d'un tel lit biologique n'a pas le même but que le lavage d'un lit filtrant classique, et ces deux lavages correspondent à des réalités physiques différentes ; c'est pour cela qu'il apparaît plus adéquat de parler de "contacteurs biologiques" plutot que de "filtres".

L'invention est fondée sur la découverte surprenante qu'il était possible de trouver un matériau granulaire actif, tel que du charbon actif ou un matériau à base de charbon actif, qui établisse un compromis entre des exigences a priori incompatibles : être adapté à servir de support biologique pour une population bactérienne, tout en étant susceptible d'être lavé en sorte de décrocher et d'évacuer les matières et organismes indésirables, sous une faible vitesse linéaire d'air et/ou d'eau (ce qui est intéressant du point de vue énergétique et du point de vue attrition).

En combinaison avec la détermination d'un tel matériau, l'invention propose une procédure de lavage efficace qui n'induise pas pour autant d'usure rédhibitoire du matériau granulaire.

Elle propose également un paramètre intrinsèque au contacteur biologique qui permette de commander à bon escient le déclenchement des cycles de lavage, malgré les fluctuations de l'environnement, notamment de la température ambiante.

L'invention propose à cet effet un contacteur biologique d'épuration pour la production d'eau potable, comportant une cuve contenant un lit granulaire et comprenant un fond surmonté par un fond filtrant, et une paroi latérale munie d'un bord supérieur formant un bord de surverse, un dispositif d'alimentation en eau à traiter à la partie supérieure de la cuve, un dispositif de sortie d'eau traitée sous le fond de la cuve, un dispositif d'injection d'eau de lavage et un dispositif d'injection d'air de lavage sous ce fond filtrant, caractérisé en ce que ce lit granulaire comporte une couche à base de charbon actif dont le matériau constitutif satisfait aux conditions suivantes :

. densité comprise entre 0,18 et 0,32 g/cm3,

. pouvoir adsorbant au tétrachlorure de carbone compris entre 60 % et 120 % en poids,

. rétention au tétrachlorure de carbone inférieure à 25 % en poids de la masse adsorbée en tétrachlorure de carbone,

. bleu de méthylène : entre 5 et 30 ml,

. granulométrie : entre 0,5 et 1,5 mm de taille effective avec un coefficient d'uniformité inférieure à 2 ;

cette cuve étant en outre munie d'un dispositif de suivi au cours du temps d'une grandeur représentative de la population algale dans ladite couche, associé à un dispositif de déclenchement recevant des signaux de mesure de ce dispositif de suivi et connecté aux dispositifs d'injection d'eau et d'air en sorte de déclencher un cycle de lavage (air seul ; air + eau ; eau seule) lorsque la grandeur représentative atteint un seuil de consigne prédéterminé.

Selon des dispositions préférées de l'invention éventuellement combinées :

MATERIAU :

– le matériau constitutif de cette couche granulaire satisfait aux conditions suivantes :

. densité comprise entre 0,18 et 0,26 g/cm3,

. pouvoir adsorbant au tétrachlorure de carbone compris entre 70 et 120 %,

. rétention au tétrachlorure de carbone compris entre 15 et 25 % en poids de la masse adsorbée en tétrachlorure de carbone,

. bleu de méthylène : entre 18 et 30 ml.

– de préférence ce matériau satisfait aux conditions suivantes :

. densité comprise entre 0,19 et 0,24 g/cm3

. pouvoir adsorbant au tétrachlorure de carbone compris entre 80 et 110 %,

. rétention au tétrachlorure de carbone comprise entre 15 et 20 % en poids de la masse adsorbée en tétrachlorure de carbone,

. bleu de méthylène : entre 20 et 30 ml.

– ledit lit granulaire est constitué en quasi totalité par ladite couche de matériau granulaire, ce matériau a une taille effective comprise entre 0,5 et 1 mm ;

– ce matériau a une taille effective comprise entre 0,5 et 0,8 mm, avec un coefficient d'uniformité inférieur à 1,9 ;

– ce matériau est choisi avec une taille effective comprise entre 0,6 et 0,8 mm, avec un coefficient d'uniformité inférieur à 1,8 ;

– ledit lit granulaire comporte une couche de sable sous ladite couche de matériau granulaire actif, ce matériau étant choisi avec une taille effective comprise entre 1 et 1,5 mm avec un coefficient d'uniformité inférieur à 1,6, tandis que la taille effective du sable est comprise entre 0,5 et la taille effective du matériau actif, de préférence comprise entre 0,5 et 1 mm ;

– ce matériau granulaire a une taille effective comprise entre 1 et 1,4 mm avec un coefficient d'uniformité inférieur à 1,5 ;

– ce matériau granulaire a une taille effective comprise entre 1,1 et 1,3 mm avec un coefficient d'uniformité inférieur à 1,4 ;

– le matériau est du charbon actif ;

POPULATION ALGALE :

– le dispositif de suivi de la population algale dans ladite couche comporte des capteurs de pression situés en deux niveaux de mesure dans une partie supérieure de cette couche, et destinés à mesurer la perte de charge de l'eau circulant entre ces deux niveaux ;

– ces capteurs sont respectivement situés approximativement à l'interface eau/lit et entre 10 et 30 cm de profondeur ;

FOND :

– le fond de la cuve comporte des buselures dont la tête comporte des fentes verticales de 0,4 mm de largeur.

L'invention propose également un procédé de pilotage d'un contacteur biologique, comportant un lit granulaire comprenant une couche à base de charbon actif et destiné à assurer une épuration dans la production d'eau potable, selon lequel :

– on choisit le matériau constitutif de cette couche granulaire en sorte de satisfaire aux conditions suivantes :

. densité comprise entre 0,18 et 0,32 g/cm3,

. pouvoir adsorbant au tétrachlorure de carbone compris entre 60 % et 120 % en poids,

. rétention au tétrachlorure de carbone inférieure à 25 % en poids de la masse adsorbée en tétrachlorure de carbone,

. bleu de méthylène : entre 5 et 30 ml,

. granulométrie : entre 0,5 et 1,5 mm de taille effective avec un coefficient d'uniformité inférieure à 2.

– on fait circuler de haut en bas l'eau à traiter à une vitesse linéaire inférieure à 45 m/h en sorte de maintenir entre l'eau et le lit un temps de contact en fût vide d'au moins 5 mn ;

– on surveille une grandeur représentative de la population algale existant dans le lit ;

– on déclenche un cycle de lavage lorsque cette grandeur atteint un seuil de consigne prédéterminé, lequel cycle comprend les étapes suivantes, après interruption de l'alimentation en eau à traiter :

. abaissement du plan d'eau au plus jusqu'au niveau supérieur du lit granulaire,

. injection d'air à contre-courant, à une vitesse apparente inférieure à 80 Nm3/h.m$^2$, au moins jusqu'à l'apparition de bulles en surface du plan d'eau,

. injection additionnelle d'eau avec une vitesse apparente de 15 à 50 m/h jusqu'à la remontée du plan d'eau jusqu'à un niveau de surverse du contacteur, l'injection d'air étant maintenue pendant au moins 30 secondes, mais interrompue avant que ce niveau de surverse soit atteint par le plan d'eau,

. rinçage à l'eau par surverse pendant de 5 à 20 mn avec une vitesse d'eau comprise entre 8 et 50 m/h.

– on arrête l'injection d'eau à contre-courant et on réalimente le contacteur en eau à traiter.

Selon d'autres dispositions préférées, éventuellement combinées, de ce procédé de l'invention :

– le lit étant constitué en quasi totalité par ladite couche, après chaque cycle de lavage on rejette à l'égout l'eau sortant du contacteur pendant une durée prédéterminée ;

– cette durée prédéterminée est supérieure à 20 mn ;

– la grandeur représentative de la population algale existant dans le lit est la perte de charge mesurée au travers d'au moins une partie supérieure de la couche granulaire entre deux niveaux de mesure, sous la surface supérieure de cette couche ;

– la perte de charge est mesurée entre approximativement le niveau de la surface supérieure de la couche granulaire et un niveau situé entre 10 et 30 cm de profondeur ;

– le seuil de consigne prédéterminé correspond à une perte de charge de 5 à 20 cm par tranche de 10 cm de couche entre lesdits niveaux de mesure ;

– la vitesse d'injection d'air est constante avant et après l'injection additionnelle d'eau ;

– la vitesse apparente d'injection d'air est comprise entre 10 et 40 Nm3/h.m$^2$ ;

– cette vitesse apparente est comprise entre 20 et 30 Nm3/h.m$^2$ environ ;

– cette vitesse apparente d'injection est égale à environ 20 Nm3/h.m$^2$ ;

– l'injection d'air seul dure entre 1 et 4 mn ;

– la vitesse d'injection d'eau est comprise entre 5 et 10 m/h ;

– la vitesse d'injection d'eau est comprise entre 8 et 9 m/h environ ;

– l'injection d'air est interrompue au plus à 90 % de la durée de remontée du plan d'eau ;

Des objets, caractéristiques et avantages de l'invention ressortent de la description qui suit, donnée à titre d'exemple non limitatif, en regard des dessins annexés sur lesquels :

– la figure 1 est un schéma synoptique d'une installation de production d'eau potable comportant un contacteur biologique consécutif à un filtre à sable ;

– la figure 2 est une vue en coupe verticale transversale du contacteur biologique de l'installation de la figure 1 ;

– la figure 3 en est une vue partielle en coupe longitudinale, représentant le fond filtrant du contacteur biologique ;

– les figures 4A à 4E sont des vues schématiques correspondant à 5 phases successives d'un cycle de lavage du contacteur biologique de la figure 2 ;

– la figure 5 est un schéma synoptique d'une autre installation de production d'eau potable, comportant un contacteur biologique substitué à un filtre à sable ;

– la figure 6 est un schéma synoptique de l'ensemble de filtration d'encore une autre installation de production d'eau potable, comportant un contacteur biologique incluant un lit filtrant de sable ;

– les figures 7A à 7E sont des vues schématiques correspondant à 5 phases successives d'un cycle de lavage du contacteur biologique de la figure 6 ; et

– la figure 8 est un diagramme corrélant, pour diverses températures, la perte de charge au travers d'une tranche de 10 cm à la partie supérieure du lit de la figure 2, avec la vitesse de filtration.

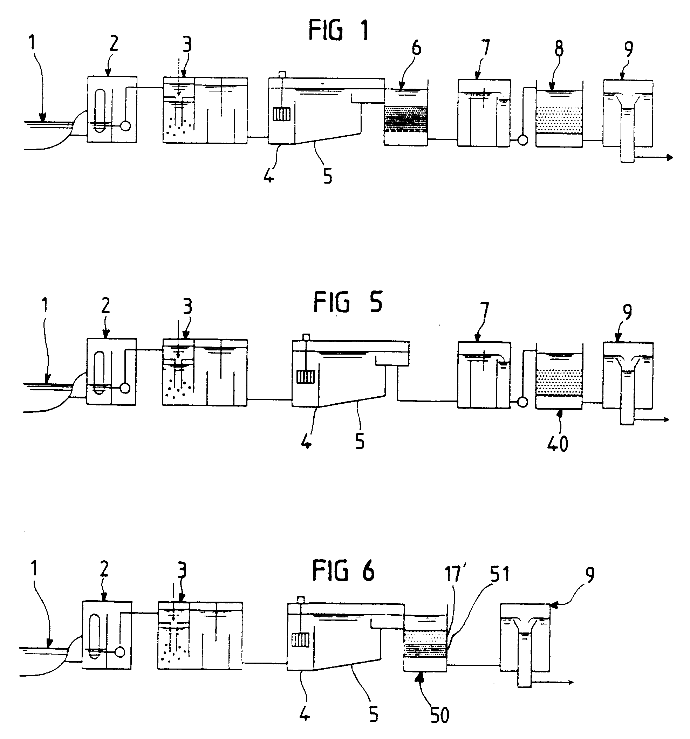

La figure 1 représente de façon très schématique les principales étapes de traitement que l'on applique successivement à une eau que l'on prélève dans le milieu naturel pour la rendre potable.

On commence, en 2, par une séparation physique visant à débarrasser l'eau, ici prélevée dans le lit d'une rivière 1, des gros objets qui ont été entraînés par elle.

On injecte ensuite, en 3, diverses substances de traitement préliminaire. En pratique on injecte de l'ozone (par exemple à un taux de 0,8 g/m3) qui participe à la clarification de l'eau tout en éliminant les virus. On injecte aussi un floculant (par exemple du polychlorure d'aluminium), un coagulant et, éventuellement, du charbon en poudre pour réduire la pollution de l'eau.

On fait ensuite traverser à l'eau un étage de traitement physico-chimique comportant une cuve de coagulation-floculation 4 puis une cuve de décantation 5.

L'eau décantée traverse ensuite une cuve de filtration sur sable 6 pour éliminer les matières en suspension.

Il s'agit par exemple de sable de rivière, et la vitesse apparente de filtration, en flux descendant, est par exemple voisine de 6 m/h. Cette cuve 6 est dotée d'un équipement mécanisé de lavage du sable à contre-courant (air et eau en flux ascendant) non représenté.

L'eau filtrée subit ensuite un traitement d'ozonation par injection d'ozone en 7 puis circule de haut en bas dans un contacteur biologique 8.

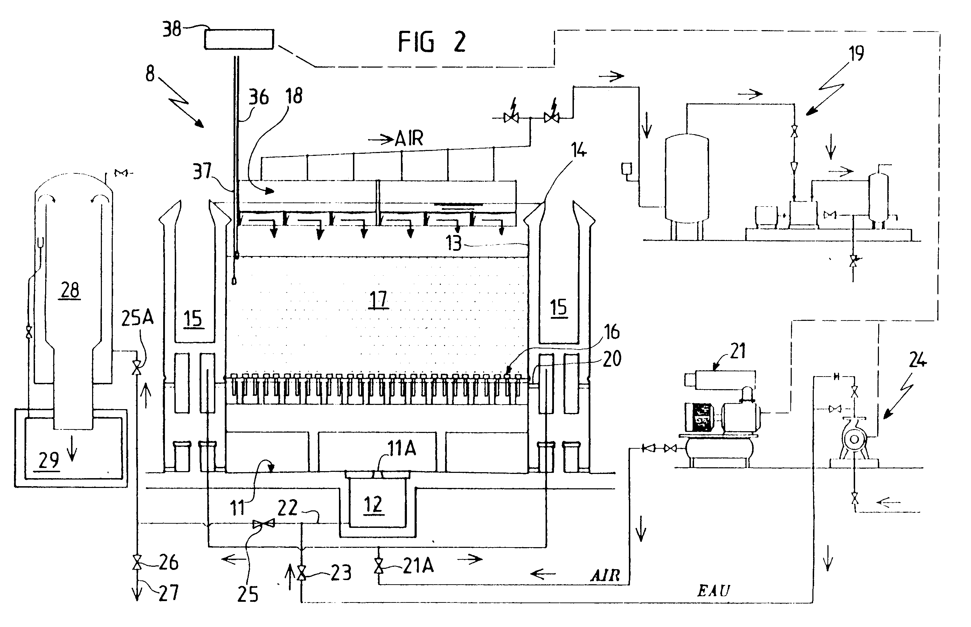

A la sortie de ce contacteur biologique l'eau transite avantageusement dans un régulateur de débit représenté à la figure 2 puis subit en 9 une chloration. Elle est alors propre à être injectée dans un réseau (non représenté) de distribution d'eau potable.

Ainsi qu'il ressort de la figure 2, le contacteur biologique 8 comprend une cuve 10 (aussi appelée bassin) comportant un fond 11 communiquant par des orifices 11A avec un canal (ici sous-jacent) de départ d'eau filtrée 12, et des parois 13 à la partie supérieure desquelles sont prévus des rebords de surverse 14 le long desquels sont prévues des goulottes d'évacuation 15. En pratique plusieurs cuves sont prévues contigues l'une à l'autre, séparées par ces goulottes.

Au-dessus du fond 11 de la cuve 10 est prévu un fond filtrant 16 au-dessus duquel se trouve une couche 17 de matériau granulaire actif, c'est-à-dire propre à constituer un support biologique pour des populations bactériennes. Comme cette couche est ici unique, le contacteur 8 est qualifié de "monocouche". Cette couche a une épaisseur comprise entre 1 et 3,5 m, de préférence comprise entre 1,5 et 3,5 m, avantageusement voisine de 2,5 m.

Au-dessus de cette couche 17 sont disposés des siphons 18 par lesquels se fait l'admission de l'eau filtrée et ozonée. Ces siphons sont ici situés au dessus du niveau des rebords 14 des parois de la cuve 10 ; ils sont alimentés par une centrale de production d'air déprimé 19.

Juste sous le fond filtrant 16 sont prévus, dans les parois de la cuve, des orifices 20 d'injection d'air surpressé alimentés par un surpresseur 21 au travers d'une vanne 21A.

Du canal d'eau filtrée part une canalisation 22 qui communique, par une vanne 23 (normalement fermée en dehors des cycles de lavage) avec une centrale d'eau de lavage 24, par des vannes 25 et 25A (normalement fermées pendant les cycles de lavage) avec la suite de l'installation de traitement de l'eau à traiter et par une vanne 26 (seulement ouverte juste après les cycles de lavage) avec une canalisation 27 de mise à l'égout.

A titre préféré, l'eau filtrée quittant le canal 12 au travers de la vanne 25, traverse un régulateur de débit 28 de type siphoïde, asservi à un système déprimogène non représenté, à la base duquel est prévue une galerie d'eau filtrée 29 communiquant, par une ligne non représentée, avec la zone 9 de chloration de la figure 1.

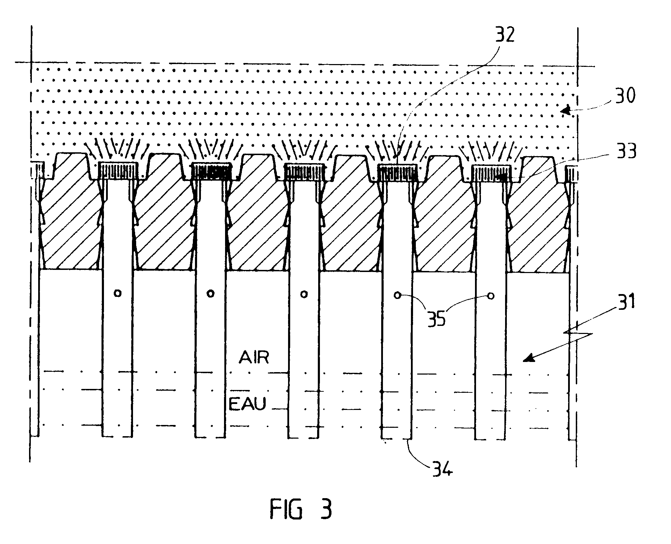

Ainsi que cela est détaillé sur la figure 3, le fond filtrant 16 est formé d'un seul plan dalle non poreux 30, au travers duquel sont disposées des buselures d'injection 31. Celles-ci comportent des têtes 32 de plus grande section que les buselures elles-mêmes ; elles sont ici de forme cylindrique et de manière préférée leur paroi latérale est munie de fentes longitudinales verticales très étroites 33 (0,4 mm compte-tenu du matériau granulaire choisi selon l'invention).

A titre d'exemple, ces têtes des buselures ont un diamètre extérieur de 50 mm, pour une hauteur de 25 mm et les fentes ont 19 mm de haut.

Les buselures sont ouvertes à leur base 34 pour permettre une montée d'eau, tandis que leur paroi comporte au moins un perçage radial de distribution d'air 35 destiné à la pénétration de l'air injecté par les tuyaux perforés 20 de la figure 2. Dans la configuration de cette figure 3 il y a donc injection simultanée d'air et d'eau.

Le matériau granulaire actif constitutif du lit 17 contacteur monocouche 8 (de préférence un charbon actif en grains) est choisi de manière à satisfaire aux conditions suivantes :

. densité : 0,18 à 0,32 g/cm3 (selon la norme SL II-1 de Février 1976 ou ASTM D 2866) ; de préférence de 0,18 à 0,26 ou, mieux encore, de 0,19 à 0,24 g/cm3.

. pouvoir absorbant au tétrachlorure de carbone ($CCl_4$) : 60 à 120 % en poids (selon la norme SL IX de Mai 1976 ou ASTM D 3467) ; de préférence de 70 à 120 % ou, mieux encore, de 80 à 110 %.

. rétention au tétrachlorure de carbone : moins de 25 % en poids de la masse adsorbée en $CCl_4$ (selon la norme SL IX de Mai 1976 ou ASTM D 3467)) ; de préférence entre 15 et 25 % ou, mieux encore, entre 15 et 20 %.

. bleu de méthylène : 15 à 30 ml (selon la norme DAB VI) ; de préférence de 18 à 30 ml ou, mieux encore, de 20 à 30 ml.

. granulométrie (selon la norme SL III-1 de Février 1976 ou ASTM D 2862) :

- taille effective (norme AFNOR) 0,5 à 1 mm. (de préférence de 0,5 à 0,8 mm ou, mieux encore, de 0,6 à 0,8 mm)
- coefficient d'uniformité (norme AFNOR) : moins de 2 (de préférence inférieur à 1,9 ou, mieux encore, inférieur à 1,8).

Il s'agit par exemple d'un charbon actif en grains vendu par la Société PICA sous la référence PICABIOL G 88-1.

Il est à noter que les materiaux granulaires actifs satisfaisant aux conditions précitées, notamment lorsqu'il s'agit de charbons actifs en grains, présentent la propriété de pouvoir être lavés avec une faible attrition (les cycles de lavage, malgré les phénomènes de brassage importants qu'ils impliquent, ne conduisent qu'à une lente diminution de la granulométrie avec une faible apparition de fines particules susceptibles d'encrasser et/ou de colmater le filtre et son fond filtrant et d'être entraînées avec les eaux filtrées) : cela est favorable à une durée de vie importante en service.

Les conditions précitées peuvent s'analyser comme suit :

- la densité du matériau granulaire actif doit être suffisamment faible pour permettre un bon lavage à contre-courant en utilisant le minimum d'énergie ;
- le pouvoir adsorbant au CCl4 est représentatif de la totalité de la porosité du matériau tandis que l'indice de rétention au CCl4 est représentatif de la fraction des pores les plus fins (un charbon ayant un indice de rétentivité de 100 % n'aurait donc que des micropores). Le fait de spécifier moins de 25 % de rétention revient donc à spécifier qu'une part importante des pores sont plus grands que des micropores dont on peut penser qu'ils ne participent pas ou peu à la fixation bactérienne ;
- le bleu de méthylène est caractéristique de la capacité du charbon à fixer des molécules d'assez grande dimension. Le choix de 15 à 20 ml correspond à une valeur élevée (les charbons actifs utilisés couramment en traitement classique des eaux potables ont des indices qui se situent aux alentours de 10).
- la taille effective donne la dimension des 10 % en poids des grains les plus fins ;
- le coefficient d'uniformité indique la forme de la courbe de distribution granulométrique puisqu'il s'agit du rapport de la taille des 40 % de refus à la taille des 90 % de refus. (un indice de 1 correspond à des grains de dimension identique).

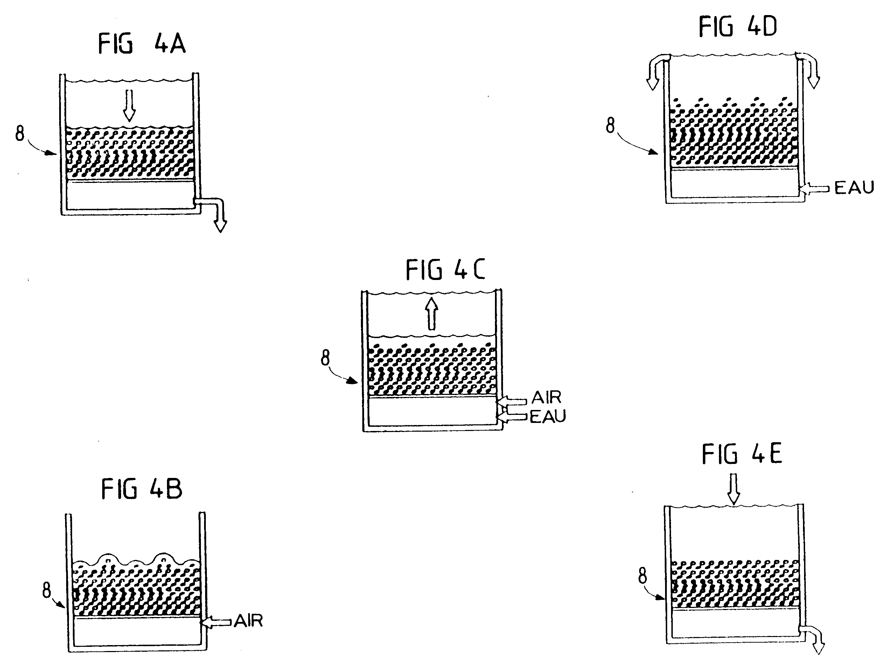

La séquence de lavage appliquée au contacteur monocouche 18 est représentée par les figures 4A à 4E ; elle comporte les étapes suivantes, après arrêt de l'alimentation en eau par les bondes 18 :

- abaissement du plan d'eau (Figure 4A) au plus jusqu'à approximativement le niveau supérieur du lit 17 de matériau granulaire actif ;
- phase d'aération ou, plus précisément, de bullage (figure 4B) de bas en haut par injection d'air par les tuyaux 19, cet air provenant du surpresseur 21, la vanne 19A étant ouverte ;
- phase d'injection mixte (air + eau) de bas en haut (figure 4C), les vannes 19A et 23 étant ouvertes tandis que les vannes 25 et 26 sont fermées ;
- remontée du plan d'eau jusqu'à surverse (figure 4D), les vannes 19A, 25 et 26 étant fermées ;
- phase de rinçage complémentaire d'eau entretenant la surverse.

Malgré un préjugé qui tendrait à éviter l'injection simultanée d'air et d'eau, responsable d'un brassage énergique important, il est apparu que la phase d'injection mixte (air + eau) permet, par rapport à une injection d'air ou d'eau seul(e), un meilleur décrochage des matières en suspension dans l'eau à traiter qui ont été retenues par le filtre ainsi, qu'apparemment, une meilleure qualité finale (consommation en chlore). Elle a donc un rôle positif.

Dans cette phase d'injection mixte, la vitesse d'injection d'air en flux ascendant, inférieure à 80 $Nm3/h.m^2$, est en pratique choisie entre 10 et 40 $Nm3/h.m^2$.

Elle est avantageusement comprise entre 20 et 30 $Nm3/h.m^2$ environ. Une vitesse inférieure (10 $Nm3/h.m^2$) ne suffit pas toujours à assurer un décolmatage suffisant du lit 17, tandis que des vitesses supérieures (40 à 50 $Nm3/h.m^2$) peuvent conduire dans certains cas à une attrition du matériau granulaire constitutif du lit, à une forte turbidité au redémarrage de la filtration après lavage et à une dégradation durable du fonctionnement des contacteurs. Une valeur voisine de 20 $Nm3/h.m^2$ semble optimale pour la plupart des cas car elle conduit en outre à un minimum en consommation en chlore de l'eau filtrée.

La vitesse d'injection d'eau, en même temps que l'air, est de préférence choisie entre 5 et 10 m/h, avantageusement choisie entre 8 et 9 m/h, en pratique voisine de 8 m/h.

Pour ce qui est de la durée de cette injection mixte, on observe que la quantité de matières en suspension lui est directement proportionnelle en-dessous de 10 mn. On choisit cette durée comme étant supérieure à 30 s : on choisit en pratique une fraction substantielle, inférieure de 90 %, de la durée de remontée du plan d'eau jusqu'au niveau des rebords 14. L'injection d'air est donc interrompue avant que le plan d'eau n'atteigne ces rebords, ce qui interrompt le bullage et réduit les risques d'entraînement de grains. Elle est de préférence inférieure à 4 mn pour des raisons de consommation d'énergie notamment. En pratique on la choisit entre 90 s et 3 mn, de préférence entre 90 s et 3 mn environ pour une vitesse d'injection d'air de 30 Nm3/h.m$^2$.

L'injection préalable d'air seul, d'une durée au moins suffisante pour l'apparition de bulles en surface, renforce l'élimination des matières en suspension retenues par le lit, sans pour autant accroître les pertes de matériau granulaire. Cette injection se fait avantageusement, pour des raisons pratiques, à la même vitesse que lors de la phase subséquente d'injection mixte, c'est-à-dire entre 20 et 30 Nm3/h.m$^2$. Sa durée totale dépend en pratique du temps de montée en puissance du surpresseur 21 ; la durée en régime maximal constant est de préférence inférieure à celle de la phase d'injection mixte, et est en pratique comprise entre 30 s et 90 s, de préférence entre 45 s et 60 s environ.

La phase résiduelle de remontée du plan d'eau jusqu'au régime de surverse est, pour des raisons pratiques, effectuée avec la même vitesse d'eau que lors de l'injection mixte ; sa durée dépend de la hauteur dont le plan d'eau doit remonter après l'arrêt de l'injection d'air jusqu'au niveau de surverse des rebords 14.

Le rinçage subséquent en régime de surverse est de préférence effectué à une vitesse supérieure à celle de la phase d'injection mixte, en pratique choisie entre 8 et 50 m/h ; elle est de préférence comprise entre 15 et 25 m/h (avantageusement approximativement égale à 16 m/h). Des vitesses inférieures peuvent parfois être insuffisantes pour éliminer la totalité des matières en suspension décrochées du matériau granulaire constitutif du lit 17 tandis que des vitesses supérieures peuvent parfois induire inutilement des pertes de matériau granulaire.

La durée du rinçage est avantageusement comprise entre 10 mn et 20 mn, de préférence comprise entre 10 mn et 12 mn. Cette valeur paraît suffire dans certains cas pour l'élimination des matières en suspension tandis que des durées supérieures à 20 mn se traduisent inutilement par un supplément d'eau déjà filtrée consommée pour le lavage.

A titre d'exemple, dans le cas du filtre 55 de l'Usine Edmond PEPIN de Choisy-le-Roi, pour un lit de charbon actif PICABIOL du type précité (satisfaisant les conditions préférées les plus étroites) d'une hauteur de 1,5 m et d'une superficie de 117 m$^2$, le régime de lavage (au travers duquel de l'eau à filtrer passe en régime normal à une vitesse de 9 à 10 m/h) est défini comme suit :

. 2 mn 30 s de montée en charge du surpresseur ;

. 60 s d'air seul à 30 Nm3/h.m$^2$ (ce qui correspond donc à une durée totale d'injection d'air de 3 mn 30 s) ;

. 1 mn 30 s (de 1 mn 30 s à 2 mn) d'air à Nm3/h.m$^2$ et d'eau à 8 m/h ;

. rinçage en surverse pendant 20 mn à une vitesse de 24 m/h.

En fait, chaque lavage induit, lors du redémarrage de la filtration, une dégradation temporaire de l'eau produite, aux points de vue matières en suspension, demande en chlore et quantité de fuites de microorganismes. Cela est dû au fait que, à la fin du rinçage, il reste dans la cuve du filtre un volume d'eau de lavage qui va venir en tête des eaux filtrées lors du redémarrage de la filtration.

Pour pallier cet inconvénient, il est recommandé d'éviter l'entraînement vers l'aval de cette charge restée bloquée dans la cuve à la fin du lavage : il est proposé à cet effet, (figure 4D) de mettre directement à l'égout (par ouverture des seules vannes 25 et 26) l'eau sortant du lit 17 pendant la première demi-heure, voire la première heure (en pratique le plus souvent moins de 2 heures), après le retour en régime de filtration. En variante, cette charge est retenue par une fine couche granulaire sous-jacente au matériau granulaire actif. On peut aussi recycler cette eau, mais cela se révèle peu intéressant du point de vue économique.

Plutôt que de déclencher des cycles de lavage à intervalles fixes, comme cela peut se faire éventuellement avec des filtres à sable, l'invention propose de suivre une grandeur intrinsèque au contacteur biologique de manière à commander les cycles de lavage, ni trop tôt, ni trop tard, malgré les fluctuations dans le débit d'eau à traiter, et dans l'environnement (température de l'eau notamment).

Il a ainsi été découvert qu'on pouvait commander les cycles de lavage à partir de la perte de charge enregistrée sous la surface supérieure du lit granulaire actif au travers d'une partie au moins de sa profondeur.

Il faut en effet noter que le lavage d'un contacteur biologique ne vise pas tant éliminer les matières en suspension retenues par le filtre qui en assurent un colmatage physique, comme cela est recherché dans un lit filtrant, qu'à contrôler la vie bactérienne au sein du lit 17 : il faut éviter l'apparition d'une population de forme de vie supérieure visible à l'oeil nu (naïs, daphnées, mollusques, ...).

En ce sens, le lavage d'un contacteur biologique n'est pas de même nature que le lavage d'un lit filtrant classique, à sable par exemple.

Or, une analyse poussée de la vie biologique dans un tel contacteur biologique a montré que le changement de forme de vie est précédé par l'apparition d'algues responsables d'un colmatage localisé et temporaire du lit biologique 17. Il suffit donc de surveiller l'apparition de cette augmentation de colmatage (avec le supplément associé de perte de charge) pour décider à bon escient du moment de déclencher un cycle de lavage.

L'analyse précitée a en effet montré que dans l'eau filtrée sur sable et ozonée peut exister une flore principalement formée d'algues, tandis que tend à se développer à la surface du charbon actif une faune, par exemple composée de rotifères (microorganismes) et d'annélides (macroorganismes), qui subsiste tout au long de l'année dans des proportions et des quantités variables. Les algues sont un des aliments des macroorganismes précités.

Or ces algues, telles que par exemple des ("synedra"), ont la forme de longs filaments qui se déposent à la partie supérieure du lit et s'opposent au passage de l'eau.

Il est donc intéressant de surveiller la population d'algues, par tout moyen approprié et de commander un lavage lorsque cette population franchit un seuil prédéterminé. Une manière préférée pour surveiller cette population est de mesurer la perte de charge associée.

L'intérêt de cette découverte est de permettre de définir un seul paramètre représentatif des deux causes possibles justifiant un lavage (colmatage physique, ou perspective de l'apparition des formes de vie supérieure.

Cette perte de charge est avantageusement mesurée sous la surface libre du matériau granulaire actif, à travers au moins une partie de la profondeur du lit filtrant (entre 0,5 % et 20 %) grâce ici à deux capteurs de pression 36 et 37 constituant conjointement un système de suivi de la population algale. Ils émettent des signaux de mesure à un système de déclenchement 38 adapté à commander selon la séquence voulue les éléments 21 et 24 (constitué par exemple par un microordinateur de tout type approprié).

Compte tenu des caractéristiques imposées au matériau granulaire actif, le seuil de perte de charge devant déclencher le lavage est avantageusement choisi entre 5 et 20 cm par tranche de 10 cm de hauteur.

A titre d'exemple, cette perte de charge est mesurée entre 0 et 10 cm de profondeur, le capteur 36 pouvant se trouver dans l'eau juste au dessus du lit.

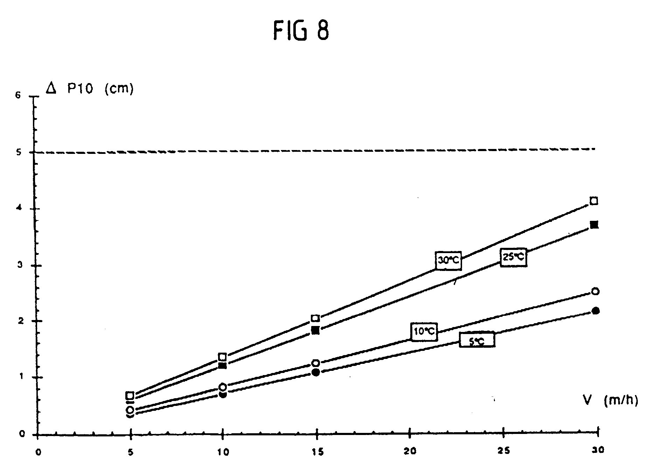

La figure 8 montre les valeurs $\triangle$ P de seuils de charge minimum obtenus après lavage préalable, en régime permanent en l'absence de toutes algues (matériau propre). Cette figure donne en effet, pour diverses températures de fonctionnement, les valeurs $\triangle$ P de la perte de charge constatée pour la tranche supérieure de 10 cm, en fonction de la vitesse moyenne de filtration V en m/h. Ces valeurs correspondent à un lit dont le matériau a une taille effective de 0,9 mm et une porosité de 0,5, et elles sont données en centimètres de C. E., (c'est-à-dire de colonne d'eau). Ces valeurs sont toujours inférieures à 5 cm ce qui justifie le seuil arbitraire de 5 cm précité ce n'est qu'au delà que commence le colmatage par les algues.

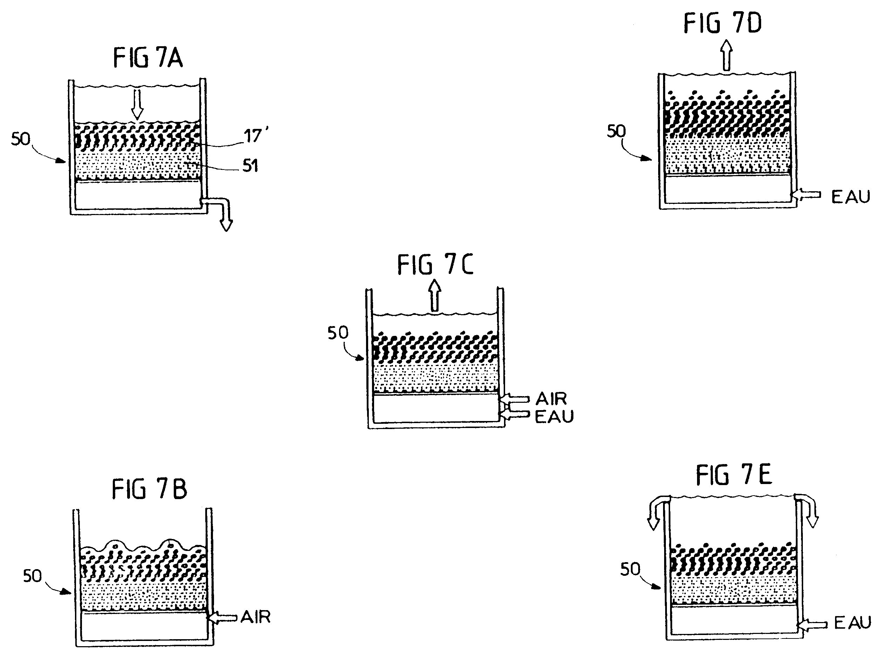

La figure 5 représente une variante de réalisation de l'installation de la figure 1 dans laquelle, toutes choses étant semblables par ailleurs, on a supprimé la filtration sur sable, et l'eau décantée et ozonée est directement injectée dans un contacteur biologique 40 de même type que le contacteur biologique 8 des figures 1 à 3.

La séquence de lavage y est de même nature qu'aux figures 4A à 4E, selon les mêmes plages numériques. Le déclenchement des cycles de lavage y est déclenché de la même manière qu'indiqué cidessus.

La figure 6 représente encore une autre variante de réalisation de l'installation de la figure 1 dans laquelle, toutes choses étant égales par ailleurs, l'ensemble des cuves 6 et 8 est remplacé par un contacteur biologique mixte (ou bicouche) 50, similaire au contacteur biologique 8 des figures 1 à 3, à ceci près qu'une couche filtrante 51 a été ajoutée audessus du fond filtrant 16, sous la couche de matériau granulaire 17'. Ce cas correspond par exemple au cas d'un filtre préexistant que l'on veut convertir en contacteur biologique.

Dans ce cas du contacteur biologique bicouche, le matériau granulaire actif choisi pour le lit 17'(de préférence un charbon actif en grains) diffère de celui précité par sa granulométrie :

– taille effective : 1 à 1,5 mm. (de préférence de 1 à 1,4 mm ou, mieux encore, de 1,1 à 1,3 mm).
– coefficient d'uniformité : moins de 1,6 (de préférence inférieur à 1,5 ou, mieux encore, inférieur à 1,4)

Il s'agit par exemple d'un charbon actif en grains vendu par la Société PICA sous la référence PICABIOL G 88-2.

La couche granulaire sous-jacente à ce matériau granulaire actif est choisie en fonction du matériau constituant la couche 17' et de la géométrie du filtre. Sa granulométrie est de préférence comprise entre 0,5 et 2mm (à titre d'exemple : taille effective de 0,7 mm et un coefficient d'uniformité de 1,3).

Il s'agit par exemple d'un sable de rivière.

Les séquences de lavages correspondantes, représentées aux figures 7A et 7E y sont similaires à celles des figures 4A à 4E, les figures 7D et 7E figurant deux phases successives de l'étape de la figure 4D, à savoir une étape de remontée du plan d'eau (figure 7D) et une étape de surverse (figure 7E). La phase de rejet à l'égout des premières eaux de filtration après le cycle de lavage lui-même, représentée par la figure 4E, n'est plus nécessaire ici car la couche sous-jacente 51 peut suffire à retenir la charge d'impuretés en suspension dans l'eau de rinçage subsistant dans le lit 17' au moment de l'arrêt du lavage avant d'autoriser à nouveau l'alimentation en eau décantée ozonée.

Il va de soi que la description qui précède n'a été proposée qu'à titre d'exemple non limitatif et que de nombreuses variantes peuvent être proposées par l'homme de l'art sans sortir du cadre de l'invention.

En pratique compte tenu du matériau choisi, la vitesse de passage de l'eau à traiter au travers du contacteur est inférieure à 45 m/h, de préférence comprise entre 4 et 45 m/h, par exemple comprise entre 15 et 25 m/h.

Le matériau peut être remplacé par des petites billes de toute matière appropriée, enrobées de charbon actif.

D'autres grandeurs peuvent par ailleurs être choisies pour suivre l'évolution de la population algale : on peut ainsi penser à la mesure de la concentration en chlorophylle A ou la concentration en phéopigments, ou le comptage direct (microscope, compteur ...) ou indirect (couleur, turbidité ...) des cellules algales.

## Revendications

1. Contacteur biologique d'épuration (8, 40, 50) pour la production d'eau potable, comportant une cuve (10) contenant un lit granulaire (17, 17'), comprenant un fond surmonté d'un fond filtrant (16) et une paroi latérale (13) munie d'un bord supérieur (14) formant un bord de surverse, un dispositif (18) d'alimentation en eau à traiter à la partie supérieure de la cuve, un dispositif (12, 22, 25) de sortie d'eau traitée sous le fond de la cuve, un dispositif d'injection d'eau de lavage (24) et un dispositif d'injection d'air de lavage (21) sous ce fond filtrant, caractérisé en ce que ce lit granulaire comporte une couche à base de charbon actif dont le matériau constitutif satisfait aux conditions suivantes :

. densité comprise entre 0,18 et 0,32 g/cm3,

. pouvoir adsorbant au tétrachlorure de carbone compris entre 60 % et 120 % en poids,

. rétention au tétrachlorure de carbone inférieure à 25 % en poids de la masse adsorbée en tétrachlorure de carbone,

. bleu de méthylène : entre 5 et 30 ml,

. granulométrie : entre 0,5 et 1,5 mm de taille effective avec un coefficient d'uniformité inférieure à 2 ;

cette cuve étant en outre munie d'un dispositif (36, 37) de suivi au cours du temps d'une grandeur représentative de la population algale dans ladite couche, associé à un dispositif de déclenchement (38) recevant des signaux de mesure de ce dispositif de suivi et connecté aux dispositifs d'injection d'eau et d'air en sorte de déclencher un cycle de lavage (air seul ; air + eau ; eau seule) lorsque la grandeur représentative atteint un seuil de consigne prédéterminé.

2. Contacteur selon la revendication 1, caractérisé en ce que le matériau constitutif de cette couche granulaire satisfait aux conditions suivantes :

. densité comprise entre 0,18 et 0,26 g/cm3,

. pouvoir adsorbant au tétrachlorure de carbone compris entre 70 et 120 %,

. rétention au tétrachlorure de carbone compris entre 15 et 25 % en poids de la masse adsorbée en tétrachlorure de carbone,

. bleu de méthylène : entre 18 et 30 ml.

3. Contacteur selon la revendication 2, caractérisé en ce que le matériau constitutif (17, 17') de cette couche granulaire satisfait aux conditions suivantes :

. densité comprise entre 0,19 et 0,24 g/cm3,

. pouvoir adsorbant au tétrachlorure de carbone compris entre 80 et 110 %,

. rétention au tétrachlorure de carbone comprise entre 15 et 20 % en poids de la masse adsorbée en tétrachlorure de carbone,

. bleu de méthylène : entre 20 et 30 ml.

4. Contacteur selon l'une quelconque des revendications 1 à 3, caractérisé en ce que ledit lit granulaire est constitué en quasi totalité pour ladite couche (17) de matériau granulaire, ce matériau ayant une taille effective comprise entre 0,5 et 1 mm.

5. Contacteur selon la revendication 4, caractérisé en ce que ce matériau a une taille effective comprise entre 0,5 et 0,8 mm, avec un coefficient d'uniformité inférieur à 1,9.

6. Contacteur selon la revendication 5, caractérisé en ce que le matériau est choisi avec une taille effective comprise entre 0,6 et 0,8 mm avec un coefficient d'uniformité inférieur à 1,8.

7. Contacteur selon l'une quelconque des revendications 1 à 3, caractérisé en ce que ledit lit granulaire comporte une couche de sable (51) sous ladite couche de matériau granulaire actif (17'), ce matériau est choisi avec une taille effective comprise entre 1 et 1,5 mm avec un coefficient d'uniformité inférieur à 1,6, tandis que la taille effective du sable est comprise entre 0,5 mm et la taille effective choisie pour ce matériau granulaire actif.

8. Contacteur selon la revendication 7, caractérisé en ce que le matériau granulaire a une taille effective comprise entre 1 et 1,4 mm avec un coefficient d'uniformité inférieur à 1,5.

9. Contacteur selon la revendication 8, caractérisé en ce que le matériau granulaire a une taille effective comprise entre 1,1 et 1,3 mm avec un coefficient d'uniformité inférieur à 1,4.

10. Contacteur selon l'une quelconque des revendications 1 à 9, caractérisé en ce que ladite couche est formée de charbon actif.

11. Contacteur selon l'une quelconque des revendications 1 à 10, caractérisé en ce que le dispositif de suivi de la population algale dans ladite couche comporte des capteurs de pression (36, 37) situés en deux niveaux de mesure sous la surface libre supérieure de cette couche, destinés à mesurer la perte de charge de l'eau circulant entre ces deux niveaux.

12. Contacteur selon la revendication 11, caractérisé en ce que ces capteurs sont respectivement situés approximativement à la surface supérieure du lit et entre 10 et 30 cm de profondeur.

13. Contacteur selon l'une quelconque des revendications 1 à 12, caractérisé en ce que le fond de la cuve comporte des buselures (31) dont la tête (32) comporte des fentes verticales de 0,4 mm de largeur.

14. Procédé de pilotage d'un contacteur biologique (8, 40, 50) comprenant un lit granulaire (17, 17') comportant une couche à base de charbon actif destiné à assurer une épuration dans la production d'eau potable, selon lequel :

– on choisit le matériau constitutif de cette couche granulaire en sorte de satisfaire aux conditions suivantes :
  . densité comprise entre 0,18 et 0,32 g/cm3,
  . pouvoir adsorbant au tétrachlorure de carbone compris entre 60 % et 120 % en poids,
  . rétention au tétrachlorure de carbone inférieure à 25 % en poids de la masse adsorbée en tétrachlorure de carbone,
  . bleu de méthylène : entre 5 et 30 ml,
  . granulométrie : entre 0,5 et 1,5 mm de taille effective avec un coefficient d'uniformité inférieure à 2.

– on fait circuler de haut en bas l'eau à traiter à une vitesse linéaire inférieure à 45 m/h en sorte de maintenir entre l'eau et le lit un temps de contact en fut vide d'au moins 5 mn ;

– on surveille (36, 37) une grandeur représentative de la population algale existant dans le lit ;

– on déclenche (38) un cycle de lavage lorsque cette grandeur atteint un seuil de consigne prédéterminé, lequel cycle comprend les étapes suivantes, après interruption de l'alimentation en eau à traiter :
  . abaissement du plan d'eau au plus jusqu'au niveau supérieur du lit granulaire,
  . injection d'air à contre-courant, à une vitesse apparente inférieure à 80 Nm3/h.m$^2$, au moins jusqu'à l'apparition de bulles en surface du plan d'eau,
  . injection additionnelle d'eau avec une vitesse apparente de 15 à 50 m/h jusqu'à la remontée du plan d'eau jusqu'à un niveau de surverse du contacteur, l'injection d'air étant maintenue pendant au moins 30 secondes, mais interrompue avant que ce niveau de surverse soit atteint par le plan d'eau,
  . rinçage à l'eau par surverse pendant de 5 à 20 mn avec une vitesse d'eau comprise entre 8 et 50 m/h.

– on arrête l'injection d'eau à contre-courant et on réalimente le contacteur en eau à traiter.

15. Procédé selon la revendication 14, caractérisé en ce que le lit étant constitué en quasi totalité par ladite couche (17), après chaque cycle de lavage on rejette à l'égout (22, 25, 26, 27) l'eau sortant du contacteur pendant une durée prédéterminée.

16. Procédé selon la revendication 15, caractérisé en ce que cette durée prédéterminée est supérieure à 20 mn.

17. Procédé selon l'une quelconque des revendications 14 à 16, caractérisé en ce que la grandeur représentative de la population algale existant dans le lit est la perte de charge mesurée (36, 37) au travers d'au moins une partie supérieure de la couche granulaire entre deux niveaux de mesure, sous la surface libre supérieure de cette couche.

18. Procédé selon la revendication 17, caractérisé en ce que la perte de charge est mesurée entre approximativement le niveau de la surface supérieure de la couche granulaire et à un niveau situé entre 10 et 30 cm de profondeur.

19. Procédé selon la revendication 17 ou la revendication 18, caractérisé en ce que le seuil de consigne prédéterminé correspond à une perte de charge de 5 à 20 cm par tranche de 10 cm de couche entre lesdits niveaux de mesure.

20. Procédé selon l'une quelconque des revendications 14 à 19, caractérisé en ce que la vitesse d'injection d'air est constante avant et après l'injection additionnelle d'eau.

21. Procédé selon l'une quelconque des revendications 14 à 20, caractérisé en ce que la vitesse apparente d'injection d'air est comprise entre 10 et 40 Nm3/h.m$^2$.

22. Procédé selon la revendication 21, caractérisé en ce que cette vitesse apparente est comprise entre 20 et 30 Nm3/h.m$^2$ environ.

23. Procédé selon la revendication 22, caractérisé en ce que cette vitesse apparente d'injection est égale à environ 20 Nm3/h.m$^2$.

24. Procédé selon l'une quelconque des revendications 21 à 23, caractérisé en ce que l'injection d'air seul dure entre 1 et 4 mn.

25. Procédé selon l'une quelconque des revendications 14 à 24, caractérisé en ce que la vitesse d'injection d'eau est comprise entre 5 et 10 m/h.

26. Procédé selon la revendication 25, caractérisé en ce que la vitesse d'injection d'eau est comprise entre 8 et 9 m/h environ.

27. Procédé selon l'une quelconque des revendications 14 à 25, caractérisé en ce que l'injection d'air est interrompue au plus à 90 % de la durée de remontée du plan d'eau.

## Claims

1. Purification biological contactor (8, 40, 50) for producing drinking water including a tank (10) containing a granular bed (17, 17') and comprising a bottom on top of which is a filter bottom (16) and a side wall (13) with an upper edge (14) forming an overflow lip, a device (18) for supplying water to be treated to the upper part of the tank, a device (12, 22, 25) for removing treated water from beneath the bottom of the tank, a device for injecting washing water (24) and a device for injecting washing air (21) under the filter bottom, characterised in that the granular bed comprises a layer based on activated carbon the material constituting which meets the following conditions:

. density between 0.18 and 0.32 g/cm$^3$,

. carbon tetrachloride adsorbing power between 60% and 120% by weight,

. carbon tetrachloride retention less than 25% by weight of the carbon tetrachloride adsorbed mass,

. methylene blue: between 5 and 30 ml,

. particle size: between 0.5 and 1.5 mm effective size with a coefficient of uniformity less than 2;

the tank being further provided with a device (36, 37) for monitoring in time a parameter representative of the population of algae in said layer associated with a triggering device (38) receiving measuring signals from the monitoring device and connected to the water and air injection devices so as to trigger a washing cycle (air only; air plus water; water only) when the representative parameter reaches a predetermined set point threshold.

2. Contactor according to claim 1 characterised in that the material constituting the granular layer meets the following conditions:

. density between 0.18 and 0.26 g/cm$^3$,

. carbon tetrachloride adsorbing power between 70% and 120%,

. carbon tetrachluoride retention between 15% and 25% by weight of the carbon tetrachloride adsorbed mass,

. methylene blue: between 18 and 30 ml.

3. Contactor according to claim 2 characterised in that the material (17, 17′) constituting the granular layer meets the following conditions:

. density between 0.19 and 0.24 g/cm$^3$,

. carbon tetrachluoride adsorbing power between 80% and 110%,

. carbon tetrachloride retention between 15% and 20% by weight of the carbon tetrachloride adsorbed mass,

. methylene blue: between 20 and 30 ml.

4. Contactor according to any one of claims 1 through 3 characterised in that said granular bed is constituted virtually entirely of said layer (17) of granular material having an effective size between 0.5 and 1 mm.

5. Contactor according to claim 4 characterised in that the material has an effective size between 0.5 and 0.8 mm with a coefficient of uniformity less than 1.9.

6. Contactor according to claim 5 characterised in that the material is chosen with an effective size between 0.6 and 0.8 mm with a coefficient of uniformity less than 1.8.

7. Contactor according to any one of claims 1 through 3 characterised in that said granular bed comprises a layer of sand (51) under said layer of active granular material (17′), this material is chosen with an effective size between 1 and 1.5 mm with a coefficient of uniformity less than 1.6 and the effective size of the sand is between 0.5 mm and the effective size chosen for the active granular material.

8. Contactor according to claim 7 characterised in that the granular material has an effective size between 1 and 1.4 mm with a coefficient of uniformity less than 1.5.

9. Contactor according to claim 8 characterised in that the granular material has an effective size between 1.1 and 1.3 mm with a coefficient of uniformity less than 1.4.

10. Contactor according to any one of claims 1 through 9 characterised in that said layer is formed of activated carbon.

11. Contactor according to any one of claims 1 through 10 characterised in that the device for monitoring the population of algae in said layer comrprises pressure sensors (36, 37) situated at two measurement levels beneath the free top surface of the layer adapted to measure the head loss of the water passing between said two levels.

12. Contactor according to claim 11 characterised in that said sensors are respectively located approximately at the upper surface of the bed and at a depth between 10 and 30 cm.

13. Contactor according to any one of claims 1 through 12 characterised in that the bottom of the tank comprises nozzles (31) the head (32) of which comprises vertical slits 0.4 mm wide.

14. Method of controling a biological contactor (8, 40, 50) comprising a granular bed (17, 17′) containing a layer based on activated carbon adapted to provide purification in the production of drinking water, in which method:

– the material constituting the granular layer is chosen to meet the following conditions:

. density between 0.18 and 0.32 g/cm$^3$,

. carbon tetrachloride adsorbing power between 60% and 120% by weight,

. carbon tetrachloride retention less than 25% by weight of the carbon tetrachloride adsorbed mass,

. methylene blue: between 5 and 30 ml,

. particle size: between 0.5 and 1.5 mm effective size with a coefficient of uniformity less than 2;

– the water to be treated is caused to flow downwards at a linear speed less than 45 m/h so as to achieve an empty bed contact time (water in contact with the bed) of at least five minutes;

– a parameter representative of the population of algae in the bed is monitored (36, 37);

– a washing cycle is triggered (38) when this parameter reaches a predetermined set point threshold, which cycle comprises the following steps after interruption of the supply of water to be treated:

. lowering the water level to at most the top of the granular bed,

. injecting air in a counterflow arrangement at an apparent speed of less than 80 Nm³/h.m² at least until bubbles appear at the surface,

. injecting additional water with an apparent speed of 15 through 50 m/h until the water surface rises to an overflow level in the contactor, injection of air being continued for at least 30 seconds but interrupted before the water level reaches the overflow level,

. rinsing with water in overflow mode for 5 through 20 minutes with a water speed between 8 and 50 m/h;

– counterflow injection of water is halted and the contactor is again supplied with water to be treated.

15. Method according to claim 14 characterised in that, virtually all of the bed consisting of said layer (17), after each washing cycle the water leaving the contactor is drained off (22, 25, 26, 27) for a predetermined duration.

16. Method according to claim 15 characterised in that said predetermined duration is greater than 20 minutes.

17. Method according to any of claims 14 through 16 characterised in that the parameter representative of the population of algae in the bed is the head loss measured (36, 37) through at least an upper part of the granular layer between two measurement levels under the free top surface of said layer.

18. Method according to claim 17 characterised in that the head loss is measured between aproximately the top of the granular layer and a level at a depth between 10 and 30 cm.

19. Method according to claim 17 or claim 18 characterised in that the predetermined set point threshold corresponds to a head loss of 5 to 20 cm per 10 cm depth of layer between said measurement levels.

20. Method according to any one of claims 14 through 19 characterised in that the air injection speed is constant before and after the injection of additional water.

21. Method according to any one of claims 14 through 20 characterised in that the apparent air injection speed is between 10 and 40 Nm³/h.m².

22. Method according to claim 21 characterised in that said apparent speed is between approximately 20 and 33 Nm³/h.m².

23. Method according to claim 22 characterised in that said apparent injection speed is approximately equal to 20 Nm³/h.m².

24. Method according to any one of claims 21 through 23 characterised in that injection of air only is continued for between one and four minutes.

25. Method according to any one of claims 14 through 24 characterised in that the water injection speed is between 5 and 10 m/h.

26. Method according to claim 25 characterised in that the water injection speed is between approximately 8 and 9 m/h.

27. Method according to any one of claims 14 through 25 characterised in that injection of air is interrupted for at most 90% of the duration of raising the water level.

**Patentansprüche**

1. Biologischer Reinigungsfilter (8, 40, 50) zur Erzeugung von Trinkwasser mit einem ein Granulatbett (17, 17') enthaltenden Behälter (10), der einen mit einem darüber angeordneten Filtrierboden (16) versehenen Boden und eine Seitenwand (13) aufweist, die mit einem oberen Rand (14) ausgestattet ist, der einen Überlaufrand bildet, ferner mit einer Einrichtung (18) zum Einspeisen von zu behandelndem Wasser im oberen Teil des Behälters, einer Einrichtung (12, 22, 25) zum Abziehen des behandelten Wassers unter dem Boden des Behälters, einer Einrichtung zum Einleiten von Spülwasser (24) und mit einer Einrichtung zum Einblasen von Spülluft (21) unter dem Filtrierboden, **dadurch gekennzeichnet**, daß das Granulatbett eine Auflage auf der Grundlage von Aktivkohle aufweist, wobei das die Auflage ausbildende Material die folgenden Bedingungen erfüllt:

. Dichte zwischen 0,18 und 032 g/cm³,

. Adsorptionsvermögen für Tetrachlorkohlenstoff zwischen 60 Gew.-% und 120 Gew.-%,

. Retention für Tetrachlorkohlenstoff geringer als 25 Gew.-% der adsorbierten Menge an Tetrachlorkohlenstoff,

. Methylenblau: zwischen 5 und 30 ml,

. Granulometrie: zwischen 0,5 und 1,5 mm effektive Korngröße mit einem Gleichheitskoeffizienten kleiner als 2,

wobei dieser Behälter weiterhin mit einer Einrichtung (36, 37) zur Beobachtung einer für die Algenpopulation in der Auflage repräsentativen Größe über den Verlauf der Zeit hinweg versehen ist, die mit einer Auslöseeinrichtung (38), welche die Meßsignale der Einrichtung zur Beobachtung empfängt, verbunden und mit den Einrichtungen zum Einleiten von Wasser und zum Einblasen von Luft derart gekoppelt ist, daß ein Spülzyklus ausgelöst wird (nur Luft; Luft + Wasser; nur Wasser), wenn die repräsentative Größe eine Schwelle entsprechend einem vorbestimmten Einstellwert erreicht.

2. Filter nach Anspruch 1, dadurch gekennzeichnet, daß das diese granuläre Auflage bildende Material die folgenden Bedingungen erfüllt:

. Dichte zwischen 0,18 und 0,26 g/cm³,

. Adsorptionsvermögen für Tetrachlorkohlenstoff zwischen 70 und 120 %,

. Retention für Tetrachlorkohlenstoff zwischen 15 und 25 Gew.-% der adsorbierten Menge an Tetrachlorkohlenstoff,

. Methylenblau: zwischen 18 und 30 ml.

3. Filter nach Anspruch 1, dadurch gekennzeichnet, daß das die granuläre Auflage bildende Material (17, 17′) die folgenden Bedingungen erfüllt:

. Dichte zwischen 0,19 und 0,24 g/cm³,

. Adsorptionsvermögen für Tetrachlorkohlenstoff zwischen 80 und 110 %,

. Retention für Tetrachlorkohlenstoff zwischen 15 und 20 Gew.-% der adsorbierten Menge an Tetrachlorkohlenstoff,

. Methylenblau: zwischen 20 und 30 ml.

4. Filter nach einem der Ansprüche 1 bis 3, dadurch gekennzeichnet, daß das erwähnte Granulatbett bezüglich der genannten Auflage (17) nahezu vollständig aus granulärem Material besteht, das eine effektive Korngröße zwischen 0,5 und 1 mm besitzt.

5. Filter nach Anspruch 4, dadurch gekennzeichnet, daß das Material eine effektive Korngröße zwischen 0,5 und 0,8 mm mit einem Gleichheitskoeffizienten von kleiner als 1,9 besitzt.

6. Filter nach Anspruch 5, dadurch gekennzeichnet, daß das Material mit einer effektiven Korngröße zwischen 0,6 und 0,8 mm mit einem Gleichheitskoeffizienten von kleiner als 1,8 ausgewählt ist.

7. Filter nach einem der Ansprüche 1 bis 3, dadurch gekennzeichnet, daß das Granulatbett eine Sandauflage (51) unterhalb der genannten Auflage aus aktivem granulärem Material (17′) aufweist, wobei dieses Material mit einer effektiven Korngröße zwischen 1 und 1,5 mm mit einem Gleichheitskoeffizienten von kleiner als 1,6 ausgewählt ist, während die effektive Korngröße des Sandes zwischen 0,5 mm und derjenigen effektiven Korngröße liegt, die für das aktive granuläre Material ausgewählt wurde.

8. Filter nach Anspruch 7, dadurch gekennzeichnet, daß das granuläre Material eine effektive Korngröße zwischen 1 und 1,4 mm mit einem Gleichheitskoeffizienten von weniger als 1,5 besitzt.

9. Filter nach Anspruch 8, dadurch gekennzeichnet, daß das granuläre Material eine effektive Korngröße zwischen 1,1 und 1,3 mm mit einem Gleichheitskoeffizienten von weniger als 1,4 besitzt.

10. Filter nach einem der Ansprüche 1 bis 9, dadurch gekennzeichnet, daß die Auflage aus Aktivkohle gebildet ist.

11. Filter nach einem der Ansprüche 1 bis 10, dadurch gekennzeichnet, daß die Einrichtung zum Beobachten der Algenpopulation in der erwähnten Auflage Druckfühler (36, 37) aufweist, die in zwei Meßniveauhöhen unterhalb der freien oberen Oberfläche dieser Auflage angebracht und zum Messen des Druckabfalls des zwischen diesen beiden Niveauhöhen strömenden Wassers bestimmt sind.

12. Filter nach Anspruch 11, dadurch gekennzeichnet, daß diese Fühler jeweils annähernd an der oberen Oberfläche des Bettes bzw. in einer Tiefe zwischen 10 und 30 cm angeordnet sind.

13. Filter nach einem der Ansprüche 1 bis 12, dadurch gekennzeichnet, daß der Boden des Behälters Ausstülpungen (31) aufweist, deren Kopf (32) mit vertikalen Schlitzen von 0,4 mm Breite versehen ist.

14. Verfahren zum Steuern eines biologischen Filters (8, 40, 50), der ein Granulatbett (17, 17′) umfaßt, das eine Auflage auf der Grundlage von Aktivkohle aufweist, die zur Sicherstellung einer Reinigung während der Herstellung von Trinkwasser bestimmt ist, wobei das Verfahren folgende Schritte umfaßt:

– man wählt das die granuläre Auflage bildende Material so, daß es folgenden Bedingungen genügt:

. Dichte zwischen 0,18 und 0,32 g/cm³,

. Adsorptionsvermögen für Tetrachlorkohlenstoff im Bereich zwischen 60 Gew.-% und 120 Gew.-%,

. Retention für Tetrachlorkohlenstoff geringer als 25 Gew.-% der adsorbierten Menge an Tetrachlorkohlenstoff,

. Methylenblau: zwischen 5 und 30 ml,

. Granulometrie: zwischen 0,5 und 1,5 mm effektive Korngröße mit einem Gleichheitskoeffizienten kleiner als 2;

– man läßt das zu behandelnde Wasser von oben nach unten mit einer linearen Geschwindigkeit von weniger als 45 m/h derart strömen, daß zwischen dem Wasser und dem Bett in den Hohlräumen eine Kontaktzeit von mindestens 5 min erhalten wird,

– man überwacht (36, 37) eine für die im Bett vorhandene Algenpopulation repräsentative Größe,

– man löst einen Spülzyklus aus (38), wenn diese Größe die Schwelle eines vorbestimmten Einstellwertes erreicht, wobei dieser Zyklus nach der Unterbrechurig der Einleitung von zu behandelndem Wasser die folgenden Schritte umfaßt:

. Absenken des Wasserpegels höchstens bis zum oberen Rand des Granulatbettes,

. Einblasen von Luft im Gegenstrom, mit einer Relativgeschwindigkeit von weniger als 80 Nm³/h.m², mindestens bis zum Auftreten von Blasen auf der Oberfläche des Wasserspiegels,

. zusätzliches Einspritzen von Wasser mit einer Relativgeschwindigkeit von 15 bis 50 m/h bis zum Wiederanstieg des Wasserpegels auf das Überlaufniveau des Filters, wobei die Lufteinblasung während mindestens 30 Sekunden aufrechterhalten, jedoch unterbrochen wird, bevor dieses Überlaufniveau vom Waserpegel erreicht wird,

. Spülung mit Wasser durch Überlauf während 5 bis 20 min mit einer Wassergeschwindigkeit zwischen 8 und 50 m/h,

– man sperrt die Gegenstrom-Wasserzufuhr und beschickt den Filter wieder mit zu behandelndem Wasser.

15. Verfahren nach Anspruch 14, dadurch gekennzeichnet, daß während das Bett so gut wie vollständig durch die genannte Auflage (17) gebildet ist, nach jedem Spülzyklus das Wasser, das den Filter während einer vorbestimmten Zeitdauer verläßt, durch die Abwasserleitung (22, 25, 26, 27) abgelassen wird.

16. Verfahren nach Anspruch 15, dadurch gekennzeichnet, daß die vorbestimmte Zeitdauer mehr als 20 min beträgt.

17. Verfahren nach eine der Ansprüche 14 bis 16, dadurch gekennzeichnet, daß die für die im Bett befindliche Algenpopulation repräsentative Größe der Druckabfall ist, der durch mindestens einen oberen Teil der granulären Auflage hindurch zwischen zwei Meßniveauhöhen unterhalb der freien oberen Oberfläche dieser Auflage gemessen (36, 37) wird.

18. Verfahren nach Anspruch 17, dadurch gekennzeichnet, daß der Druckabfall zwischen annähernd dem Niveau der oberen Oberfläche der granulären Auflage und einem Niveau gemessen wird, das in einer Tiefe zwischen 10 und 30 cm liegt.

19. Verfahren nach Anspruch 17 oder 18, dadurch gekennzeichnet, daß die Schwelle des vorbestimmten Wertes einem Druckverlust von 5 bis 20 cm pro Abschnitt von 10 cm Auflage zwischen den genannten Meßniveauhöhen entspricht.

20. Verfahren nach einem der Ansprüche 14 bis 19, dadurch gekennzeichnet, daß die Einblasgeschwindigkeit der Luft vor und nach dem zusätzlichen Einspritzen von Wasser konstant ist.

21. Verfahren nach einem der Ansprüche 14 bis 20, dadurch gekennzeichnet, daß die Relativgeschwindigkeit der Lufteinblasung zwischen 10 und 40 $Nm^3/h.m^2$ liegt.

22. Verfahren nach Anspruch 21, dadurch gekennzeichnet, daß die Relativgeschwindigkeit ungefähr im Bereich zwischen 20 und 30 $Nm^3/h.m^2$ liegt.

23. Verfahren nach Anspruch 22, dadurch gekennzeichnet, daß die Relativgeschwindigkeit des Einblasens ungefähr gleich 20 $Nm^3/h.m^2$ ist.

24. Verfahren nach einem der Ansprüche 21 bis 23, dadurch gekennzeichnet, daß allein die Lufteinblasung zwischen 1 und 4 min dauert.

25. Verfahren nach einem der Ansprüche 14 bis 24, dadurch gekennzeichnet, daß die Geschwindigkeit der Wassereinleitung zwischen 5 und 10 m/h liegt.

26. Verfahren nach Anspruch 25, dadurch gekennzeichnet, daß die Geschwindigkeit der Wassereinleitung zwischen ungefähr 8 und 9 m/h liegt.

27. Verfahren nach einem der Ansprüche 14 bis 25, dadurch gekennzeichnet, daß das Einblasen von Luft höchstens bei 90% der Dauer des Wiederanstiegs des Wasserpegels unterbrochen wird.

FIG 1
1
2
3
6
7
8
9
4
5

FIG 5
1
2
3
7
9
4
5
40

FIG 6
1
2
3
17'
51
9
4
5
50

FIG 2
AIR
AIR
EAU
8
11
11A
12
13
14
15
16
17
18
19
20
21
21A
22
23
24
25
25A
26
27
28
29
36
37
38

30
33
31
32
35
34
AIR
EAU
FIG 3

FIG 4D
EAU
8
FIG 4E
8
FIG 4C
AIR
EAU
8
FIG 4A
8
FIG 4B
AIR
8

FIG 7D
EAU
50

FIG 7E
EAU
50

FIG 7C
AIR
EAU
50

FIG 7A
17'
51
50

FIG 7B
AIR
50

FIG 8

Δ P10 (cm)
V (m/h)
30°C
25°C
10°C
5°C
0
1
2
3
4
5
6
0
5
10
15
20
25
30